# FASCICULE DE BREVET EUROPEEN

(11) **EP 3 894 668 B1**
(45) Date de publication et mention de la délivrance du brevet: **07.08.2024**
(21) Numéro de dépôt: 20707495.6
(22) Date de dépôt: 17.01.2020
(51) Int. Cl.: F01D 25/16

(54) **DISPOSITIF POUR LE CENTRAGE ET LE GUIDAGE EN ROTATION D'UN ARBRE DE TURBOMACHINE COMPRENANT PLUSIEURS FILMS FLUIDES D'AMORTISSEMENT OPTIMISES**
VORRICHTUUNG ZUR ZENTRIERUNG UND LENKUNG EINER WELLE EINER TURBOMASCHINE MIT MEHREREN OPTIMIERTEN FILMDÄMPFERN
SYSTEM FOR CENTERING AND GUIDING THE ROTATION OF A SHAFT OF A TURBOMACHINE COMPRISING SEVERAL OPTIMISED FLUID DAMPERS

(30) Priorité: 23.01.2019 FR 1900575
(43) Date de publication de la demande: 20.10.2021
(73) Titulaire: SAFRAN AIRCRAFT ENGINES, 75015 Paris (FR)
(72) Inventeur: BECOULET, Julien, Fabien, Patrick, 77550 MOISSY-CRAMAYEL (FR); TAN-KIM, Alexandre, Jean-Marie, 77550 MOISSY-CRAMAYEL (FR)
(74) Mandataire: Brevalex
(86) Numéro de dépôt international: PCT/FR2020/050063
(87) Numéro de publication internationale: WO 2020/152410

(56) Documents cités:
- EP-A1- 3 159 560
- EP-A2- 0 143 950
- FR-A6- 2 198 572
- GB-A- 1 104 478
- GB-A- 2 107 002
- US-B1- 7 517 152

## Description

### DOMAINE TECHNIQUE

La présente invention se rapporte au domaine des turbomachines, notamment pour aéronef, et concerne plus particulièrement un dispositif pour le centrage et le guidage en rotation d'un arbre de rotor de turbomachine, comprenant un palier à amortissement par film compressible, également dénommé « palier SFD » (de l'anglais *« Squeeze Film Damping »*).

### ÉTAT DE LA TECHNIQUE ANTÉRIEURE

Un dispositif pour le centrage et le guidage en rotation d'un arbre de rotor de turbomachine du type à palier SFD est un moyen connu pour permettre l'amortissement de vibrations de l'arbre.

Dans un tel dispositif, les moyens de raccordement de la bague extérieure du palier à une structure de stator de la turbomachine comprennent une structure élastiquement déformable dans la direction radiale, parfois dénommée « cage souple » ou « cage d'écureuil ».

Cette structure élastiquement déformable permet à la bague extérieure du palier de se mouvoir transversalement, typiquement en suivant un mouvement de translation selon une trajectoire elliptique, également dénommé « orbitage », sous l'effet de vibrations de l'arbre consécutives, par exemple, à un balourd.

De plus, une cavité alimentée en huile est agencée entre la bague extérieure du palier et un support de palier entourant la bague extérieure et solidaire de la structure de stator.

Ainsi, l'orbitage de la bague extérieure conduit à un écrasement du film d'huile, cet écrasement étant à l'origine d'un amortissement.

Une telle faculté d'amortissement permet de réduire les charges de dimensionnement, et donc d'alléger les structures, d'où une réduction globale de masse.

Toutefois, avec une géométrie donnée de palier SFD, il n'est possible d'amortir qu'un seul mode de vibration bien défini. Un palier SFD n'est donc pleinement efficace que dans une plage relativement restreinte de vitesses de rotation de l'arbre.

Or, les arbres de rotor dans les turbomachines vibrent selon plusieurs modes correspondant à différentes vitesses de rotation de l'arbre, généralement éloignées les unes des autres. EP0143950 A2 montre les caractéristiques techniques du préambule de la revendication indépendante 1.

### EXPOSÉ DE L'INVENTION

L'invention a notamment pour but d'apporter une solution simple, économique et efficace à ce problème.

Elle propose à cet effet un dispositif pour le centrage et le guidage en rotation d'un arbre de turbomachine, comprenant : un palier de roulement comprenant une bague extérieure définissant un axe de palier; un support de palier comprenant un corps annulaire présentant une surface annulaire radialement interne entourant la bague extérieure ; une structure de raccordement reliant la bague extérieure au support de palier et comprenant une structure élastiquement déformable par laquelle la structure de raccordement est reliée au support de palier; et une première cavité formée entre la surface annulaire radialement interne du corps annulaire et la bague extérieure pour recevoir un premier film fluide d'amortissement.

Selon l'invention, le dispositif comprend en outre au moins une deuxième cavité formée entre le support de palier et la structure de raccordement, et agencée radialement à l'extérieur par rapport à la surface annulaire radialement interne du corps annulaire, pour recevoir un deuxième film fluide d'amortissement respectif.

Un tel agencement permet la coexistence de films fluides d'amortissement ayant des propriétés d'amortissement bien distinctes, de sorte que ces films fluides d'amortissement permettent d'amortir respectivement des modes de vibrations distincts, et potentiellement mutuellement éloignés, de l'arbre.

Suivant d'autres aspects avantageux de l'invention, le dispositif de liaison présente une ou plusieurs des caractéristiques suivantes, prise(s) isolément ou suivant toutes les combinaisons techniquement possibles :
- ladite au moins une deuxième cavité comprend au moins une deuxième cavité qui chevauche axialement la première cavité ;
- ladite au moins une deuxième cavité comprend au moins une deuxième cavité ayant une épaisseur différente d'une épaisseur de la première cavité ;
- le corps annulaire du support de palier comporte une portion annulaire radiale qui se termine, à son extrémité radialement interne, par un talon annulaire définissant la surface annulaire radialement interne du corps annulaire, et dans lequel ladite au moins une deuxième cavité est agencée radialement à l'extérieur par rapport au talon annulaire ;
- la structure de raccordement comporte en outre une bride annulaire s'étendant radialement vers l'extérieur à partir de la bague extérieure et reliant la bague extérieure à la structure élastiquement déformable ;
- ladite au moins une deuxième cavité comprend au moins une deuxième cavité formée entre une jupe annulaire, qui s'étend à partir du corps annulaire du support de palier, et un anneau cylindrique, qui s'étend à partir de la bride annulaire de la structure de raccordement ;
- l'anneau cylindrique s'étend axialement entre la bride annulaire de la structure de raccordement et le corps annulaire du support de palier ;
- la structure élastiquement déformable est formée d'une pluralité de colonnettes réparties autour de l'axe de palier et ayant chacune une première partie respective montée sur la bride annulaire de la structure de raccordement, et une deuxième partie respective espacée de la première partie respective et montée sur le support de palier;
- le support de palier comporte une bride annulaire s'étendant à partir du corps annulaire, de sorte que le corps annulaire soit agencé axialement entre la bride annulaire de la structure raccordement et la bride annulaire du support de palier ;
- le corps annulaire du support de palier comporte une pluralité de passage au travers desquels s'étendent respectivement des parties intermédiaires respectives des colonnettes, agencées entre les premières parties respectives et les deuxièmes parties respectives des colonnettes ;
- les deuxièmes parties respectives des colonnettes sont montées sur la bride annulaire du support de palier ; et
- ladite au moins une deuxième cavité comprend une pluralité de deuxièmes cavités formées autour des parties intermédiaires respectives d'au moins certaines des colonnettes, au sein des passages correspondants du corps annulaire du support de palier, pour recevoir respectivement une pluralité de deuxièmes films fluides d'amortissement ;
- le corps annulaire du support de palier comporte au moins un premier canal d'alimentation en fluide d'amortissement, s'étendant entre deux passages consécutifs de ladite pluralité de passages, et débouchant dans la première cavité, pour alimenter la première cavité en fluide d'amortissement destiné à former le premier film fluide d'amortissement.

L'invention concerne également une turbomachine, comprenant au moins un arbre centré et guidé en rotation par au moins un dispositif du type décrit ci-dessus.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
[Fig 1] est une vue schématique en section axiale d'une turbomachine pour aéronef ;
[Fig 2] est une vue schématique en section axiale à plus grande échelle d'un dispositif pour le centrage et le guidage en rotation d'un arbre dans une telle turbomachine, destiné à illustrer le problème que se propose de résoudre l'invention ;
[Fig 3] est une vue schématique partielle et en coupe axiale du dispositif de la figure 2 ;
[Fig 4] est une vue schématique partielle et en coupe axiale du dispositif de la figure 2 ;
[Fig 5] est une vue semblable à la figure 3, illustrant un dispositif pour le centrage et le guidage en rotation d'un arbre dans une turbomachine, selon un premier mode de réalisation préféré de l'invention ;
[Fig 6] est une vue semblable à la figure 4, illustrant le dispositif pour le centrage et le guidage en rotation d'un arbre dans une turbomachine, selon le premier mode de réalisation préféré de l'invention ;
[Fig 7] est un graphe illustrant les facultés d'amortissement respectives de deux films fluides d'amortissement du dispositif des figures 5 et 6 ;
[Fig 8] est un schéma de principe illustrant le fonctionnement d'une unité d'alimentation en fluide d'amortissement associée au dispositif des figures 5 et 6 ;
[Fig 9] est un double graphe illustrant conjointement l'état actif ou inactif des deux films fluides d'amortissement du dispositif des figures 5 et 6, et l'amortissement global procuré par ces deux films fluides d'amortissement ;
[Fig 10] est une vue semblable à la figure 3, illustrant un dispositif pour le centrage et le guidage en rotation d'un arbre dans une turbomachine, selon un deuxième mode de réalisation préféré de l'invention ;
[Fig 11] est une vue semblable à la figure 4, illustrant le dispositif pour le centrage et le guidage en rotation d'un arbre dans une turbomachine, selon le deuxième mode de réalisation préféré de l'invention.

Dans l'ensemble de ces figures, des références identiques peuvent désigner des éléments identiques ou analogues.

### EXPOSÉ DÉTAILLÉ DE MODES DE RÉALISATION PRÉFÉRÉS

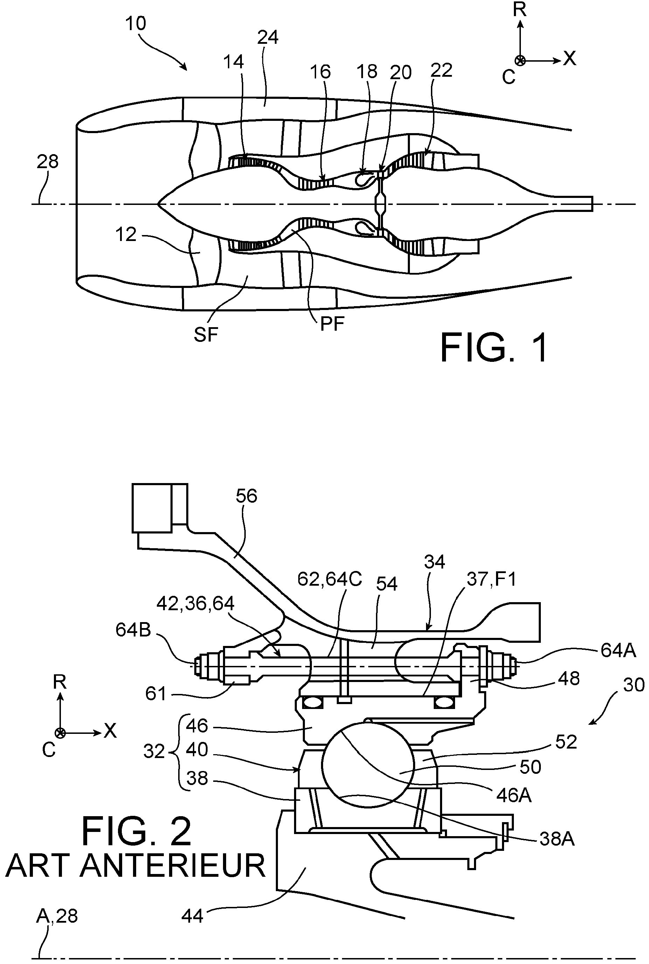

La figure 1 illustre une turbomachine 10 pour aéronef, par exemple un turboréacteur à double flux, comportant de manière générale une soufflante 12 destinée à l'aspiration d'un flux d'air se divisant en aval de la soufflante en un flux primaire PF alimentant un coeur de la turbomachine et un flux secondaire SF contournant ce coeur. Le coeur de la turbomachine comporte, de manière générale, un compresseur basse pression 14, un compresseur haute pression 16, une chambre de combustion 18, une turbine haute pression 20 et une turbine basse pression 22. La turbomachine est carénée par une nacelle 24 entourant l'espace d'écoulement du flux secondaire SF. Les rotors de la turbomachine sont montés rotatifs autour d'un axe longitudinal 28 de la turbomachine.

Dans l'ensemble de cette description, sauf lorsqu'il en est stipulé autrement, la direction axiale X est la direction de l'axe longitudinal 28, la direction radiale R est en tout point une direction orthogonale à l'axe longitudinal 28 et passant par ce dernier, et la direction circonférentielle ou tangentielle C est en tout point une direction orthogonale à la direction radiale R et à l'axe longitudinal 28. Le terme « transversal » fait référence à tout élément s'étendant orthogonalement à l'axe longitudinal 28. Les termes « interne » et « externe » font respectivement référence à une relative proximité, et un relatif éloignement, d'un élément par rapport à l'axe longitudinal 28. Enfin, les directions « amont » et « aval » sont définies par référence à la direction générale de l'écoulement des flux primaire PF et secondaire SF dans la turbomachine, selon la direction axiale X.

L'invention est, de manière générale, applicable à tout type de turbomachine, qu'elle soit mono-flux ou multi-flux, à simple corps ou multi-corps.

L'invention concerne plus spécifiquement un dispositif de centrage et de guidage en rotation d'un arbre au sein d'une telle turbomachine, du type à palier SFD.

La figure 2 illustre un tel dispositif 30, dans une configuration qui ne fait pas partie de l'invention mais dont la description qui suit va permettre d'illustrer le problème que l'invention se propose de résoudre.

L'orientation de ce dispositif est donnée à titre purement illustratif, et les directions amont et aval mentionnées dans la description qui suit peuvent être inversées sans sortir du cadre de l'invention.

Le dispositif 30 comprend, d'une manière générale, un palier de roulement 32, un support de palier 34, une structure élastiquement déformable 36, et une cavité 37 destinée à contenir un film fluide d'amortissement F1. Ces éléments sont centrés par rapport à un axe de palier A, qui correspondant à l'axe longitudinal 28 de la turbomachine lorsque le dispositif 30 est installé dans la turbomachine.

Plus précisément, le palier de roulement 32 comporte une bague intérieure 38, un roulement 40, et une bague extérieure 46.

La bague intérieure 38 est solidaire d'un piédestal 44, lui-même solidaire d'un arbre reliant par exemple un rotor de compresseur à un rotor de turbine au sein de la turbomachine.

Le dispositif 30 comprend une structure de raccordement 42 reliant la bague extérieure 46 au support de palier 34. Cette structure de raccordement 42 comporte par exemple la structure élastiquement déformable 36, par laquelle la structure de raccordement 42 est reliée au support de palier 34, et une bride annulaire 48 reliant la bague extérieure 46 à la structure élastiquement déformable 36. À cet effet, la bride annulaire 48 s'étend radialement vers l'extérieur à partir d'une extrémité axiale de la bague extérieure 46, par exemple l'extrémité aval de celle-ci.

Le roulement 40 est par exemple un roulement à billes, comprenant une pluralité de billes 50 maintenues espacées les unes des autres par une cage 52, et interposées entre la bague intérieure 38 et la bague extérieure 46, de manière bien connue. À cet égard, la bague intérieure 38 et la bague extérieure 46 comportent typiquement des rainures annulaires respectives 38A et 46A dans lesquelles sont engagées les billes 50. En variante, le roulement 40 peut être un roulement à rouleaux.

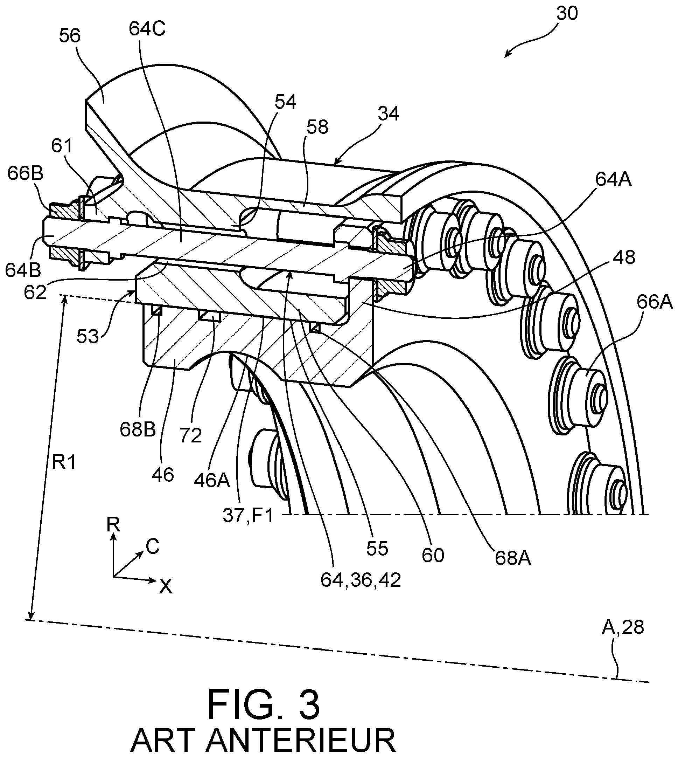

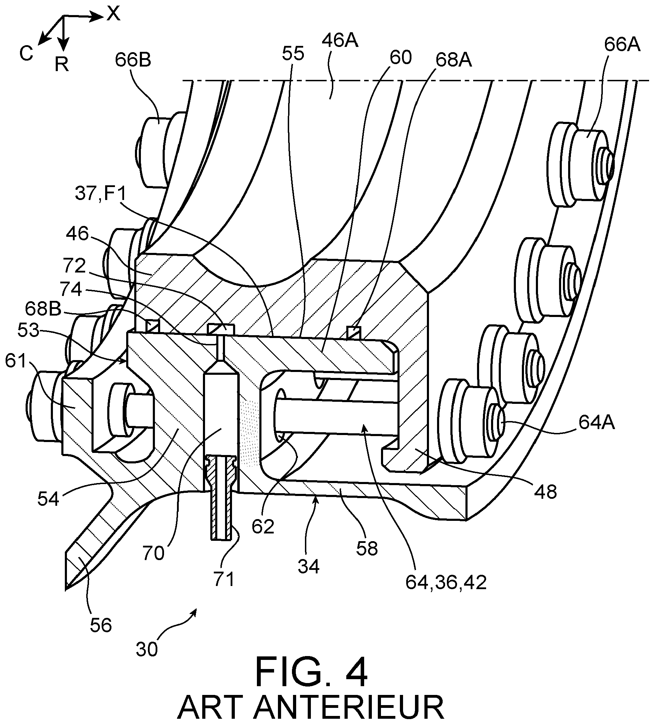

D'une manière générale, le support de palier 34 comprend un corps annulaire 53 présentant une surface annulaire radialement interne 55 qui entoure (directement) la bague extérieure 46, comme cela apparaît plus clairement sur les figures 3 et 4.

Le corps annulaire 53 est par exemple à section axiale en forme de L. Le corps annulaire 53 comporte donc dans ce cas une portion annulaire radiale 54 qui se termine, à son extrémité radialement interne, par un talon annulaire 60, de forme générale cylindrique de révolution, qui s'étend par exemple en saillie vers l'aval à partir de la portion annulaire radiale 54. Le talon annulaire 60 définit ainsi la surface annulaire radialement interne 55.

Le corps annulaire 53 est par exemple raccordé à une bride annulaire de liaison 56 du support de palier 34, s'étendant vers l'amont et radialement vers l'extérieur, et par laquelle le support de palier 34 est fixé au stator de la turbomachine. Plus précisément, la bride annulaire de liaison 56 est par exemple raccordée à l'extrémité radialement externe de la portion annulaire radiale 54 du corps annulaire 53.

Le support de palier 34 comporte en outre une jupe annulaire 58, de forme générale cylindrique de révolution, s'étendant à partir du corps annulaire 53 du support de palier, radialement à l'extérieur par rapport au talon annulaire 60, par exemple du côté axial opposé à la bride annulaire de liaison 56, en l'occurrence du côté aval par rapport au corps annulaire 53. Plus précisément, la jupe annulaire 58 est par exemple raccordée à l'extrémité radialement externe de la portion annulaire radiale 54 du corps annulaire 53.

Enfin, le support de palier 34 comporte par exemple une bride annulaire 61 raccordée au corps annulaire 53 et s'étendant transversalement, en amont et à distance du corps annulaire 53. La bride annulaire 61 est par exemple raccordée à l'extrémité radialement externe de la portion annulaire radiale 54 du corps annulaire 53.

La structure élastiquement déformable 36 raccorde la bride annulaire 48 de la structure de raccordement 42 à la bride annulaire 61 du support de palier 34.

À cet effet, le corps annulaire 53 du support de palier 34 comporte une pluralité de passages 62 qui traversent ce corps annulaire 53 de part en part selon la direction axiale pour permettre le passage de la structure élastiquement déformable 36 au travers du corps annulaire 53, comme cela apparaîtra plus clairement dans ce qui suit. Dans les modes de réalisation illustrés, les passages 62 sont agencés dans la portion annulaire radiale 54 du corps annulaire 53.

La structure élastiquement déformable 36 est par exemple formée d'une pluralité de colonnettes 64, c'est-à-dire d'éléments en forme de tige, ayant chacune une première partie 64A respective montée sur la bride annulaire 48 de la structure de raccordement 42, par exemple par boulonnage au moyen d'écrous 66A, et une deuxième partie 64B respective espacée de la première partie 64A et montée sur le support de palier 34, plus précisément sur la bride annulaire 61 de celui-ci, par exemple également par boulonnage au moyen d'écrous 66B. La première partie 64A et la deuxième partie 64B de chaque colonnette 64 sont de préférence respectivement définies au niveau de deux extrémités opposées de la colonnette.

Les colonnettes 64 comportent en outre chacune une partie intermédiaire 64C respective agencée entre la première partie 64A respective et la deuxième partie 64B respective. Les parties intermédiaires 64C respectives des colonnettes 64 s'étendent respectivement au travers des passages 62 du corps annulaire 53 du support de palier 34, avec un certain jeu permettant un certain débattement en flexion des colonnettes 64.

Enfin, la cavité 37 est formée entre la surface annulaire radialement interne 55, définie par le corps annulaire 53 du support de palier 34, et la bague extérieure 46. Il faut comprendre par-là que la cavité 37 est délimitée intérieurement par la bague extérieure 46 et est délimitée extérieurement par la surface annulaire radialement interne 55 du corps annulaire 53. La cavité 37 est ainsi agencée à une certaine distance radiale R1 de l'axe de palier A, correspondant en l'occurrence à un rayon externe de la bague extérieure 46.

Dans l'exemple illustré, la bague extérieure 46 est formée d'un seul tenant.

En variante, la bague extérieure 46 peut être en plusieurs parties. En particulier, la bague extérieure 46 peut comporter un élément annulaire interne définissant une piste pour le roulement 40, et un élément annulaire externe relié à la structure de raccordement ou formé d'un seul tenant avec cette dernière, et définissant une liaison encastrement avec l'élément annulaire interne. Dans ce cas, la première cavité 37 est définie entre la surface annulaire radialement interne 55, définie par le corps annulaire 53 du support de palier 34, et l'élément annulaire externe de la bague extérieure 46.

La cavité 37 est typiquement délimitée axialement par deux joints annulaires ou deux segments d'étanchéité 68A et 68B opposés, disposés respectivement dans deux rainures annulaires formées par exemple dans la bague extérieure 46.

En variante, la cavité 37 peut être ouverte axialement de manière à définir, à une ou deux extrémités axiales de la cavité, une section de fuite contrôlée.

De plus, un canal d'alimentation en fluide d'amortissement 70 (figure 4), destiné à alimenter la cavité 37 en fluide d'amortissement, s'étend au travers du corps annulaire 53 du support de palier 34, et débouche dans la cavité 37. Au sein de la turbomachine, le canal d'alimentation en fluide d'amortissement 70 est raccordé à une unité d'alimentation en fluide d'amortissement, qui n'est pas visible sur les figures 2-4 à l'exception d'un conduit 71 (figure 4) par lequel l'unité d'alimentation en fluide d'amortissement est reliée au canal d'alimentation en fluide d'amortissement 70.

La bague extérieure 46 comporte avantageusement une rainure annulaire de distribution 72 agencée en regard d'une sortie 74 du canal d'alimentation en fluide d'amortissement 70, de manière à faciliter la répartition du fluide d'amortissement tout autour de l'axe de palier A, au sein de la cavité 37.

Le fluide d'amortissement utilisé est en général de l'huile.

En fonctionnement, le débattement en flexion des colonnettes 64 permet de légers mouvements transversaux de la bague extérieure 46 induits par les vibrations de l'arbre, tandis que la cavité 37 reçoit du fluide d'amortissement par le canal d'alimentation 70 de sorte que le film fluide d'amortissement F1 se forme dans la cavité 37. Le film fluide d'amortissement F1 permet d'amortir des mouvements transversaux de la bague extérieure 46, et donc d'amortir des vibrations de l'arbre.

Les propriétés d'amortissement du film fluide d'amortissement F1 dépendent de divers paramètres géométriques et opérationnels, en particulier l'étendue axiale de la cavité 37, l'épaisseur (radiale) de la cavité 37, le rayon d'implantation de la cavité 37, c'est-à-dire la distance radiale séparant la cavité 37 de l'axe de palier A, et la pression du fluide d'amortissement.

Ainsi, comme expliqué ci-dessus, avec un dispositif de ce type, seul un mode de vibrations de l'arbre peut être efficacement amorti. Un tel mode de vibration correspond en général à une plage relativement restreinte de vitesses de rotation de l'arbre.

Pour permettre d'amortir plusieurs modes de vibration de l'arbre, correspondants à des vitesses de rotation de l'arbre pouvant être éloignées mutuellement, l'invention propose un perfectionnement du dispositif 30 ci-dessus, consistant à pourvoir le dispositif 30 d'au moins un deuxième film fluide d'amortissement formé entre le support de palier 34 et la structure de raccordement 42, et agencé radialement à l'extérieur par rapport à la surface annulaire radialement interne 55 du corps annulaire 53 du support de palier 34.

Autrement dit, l'invention consiste à prévoir au moins une deuxième cavité, formée entre le support de palier 34 et la structure de raccordement 42, et agencée radialement à l'extérieur par rapport à la surface annulaire radialement interne 55. Par « formée entre », il faut ici aussi comprendre que la deuxième cavité ou chaque deuxième cavité est délimitée par les éléments considérés. La deuxième cavité ou chaque deuxième cavité est raccordée à un deuxième canal d'alimentation en fluide d'amortissement correspondant, apte à l'alimenter en fluide d'amortissement, comme cela apparaîtra plus clairement dans ce qui suit.

Un tel agencement permet la coexistence de films fluides d'amortissement ayant des propriétés d'amortissement bien distinctes, notamment en matière d'épaisseur de film, de longueur de film, et de rayon d'implantation, de sorte que ces films fluides d'amortissement permettent d'amortir respectivement des modes de vibrations distincts de l'arbre, correspondants à des vitesses de rotation de l'arbre pouvant être éloignées mutuellement.

Par commodité, la cavité 37 sera dénommée « première cavité » dans ce qui suit, le canal d'alimentation en fluide d'amortissement 70 sera dénommé « premier canal d'alimentation en fluide d'amortissement », et le film fluide d'amortissement F1 sera dénommé « premier film fluide d'amortissement ».

Ainsi, dans les modes de réalisation de l'invention comme dans le dispositif 30 décrit ci-dessus, la première cavité 37 est espacée de l'axe de palier A d'une première distance radiale R1, la première cavité 37 est formée entre la surface annulaire radialement interne 55 du corps annulaire 53 du support de palier 34 et la bague extérieure 46. De plus, la première cavité 37 est raccordée à au moins un premier canal d'alimentation en fluide d'amortissement 70.

Il est à noter que la deuxième cavité ou chaque deuxième cavité est donc espacée de l'axe de palier A d'une deuxième distance radiale R2 strictement supérieure à la première distance radiale R1.

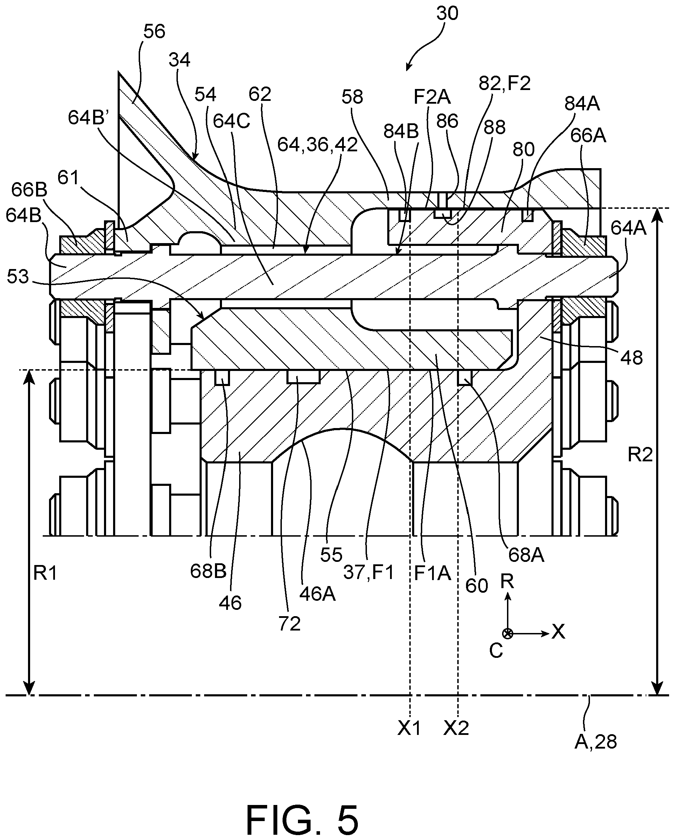

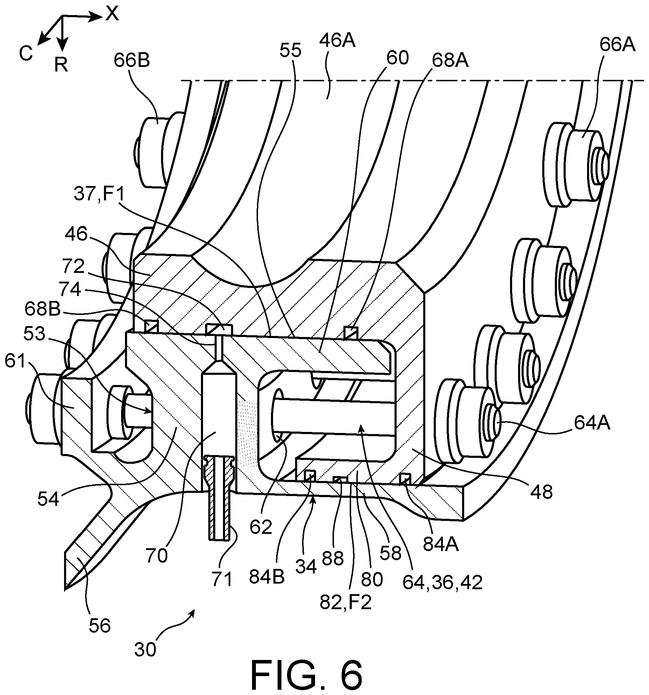

Les figures 5 et 6 illustrent un dispositif 30 selon un premier mode de réalisation de l'invention, dans lequel la structure de raccordement 42 comporte un anneau cylindrique 80 qui s'étend à partir de la bride annulaire 48, en regard radialement de la jupe annulaire 58 du support de palier 34. De plus, un deuxième film fluide d'amortissement F2 est formé entre la jupe annulaire 58 et l'anneau cylindrique 80. Le deuxième film fluide d'amortissement F2 s'étend donc sur 360 degrés autour de l'axe de palier A.

Ainsi, une deuxième cavité 82 est ménagée entre la jupe annulaire 58 et l'anneau cylindrique 80 pour recevoir le deuxième film fluide d'amortissement F2. Cette deuxième cavité 82 est donc, de manière plus générale, formée entre le support de palier 34 et la structure de raccordement 42, et radialement à l'extérieur par rapport à la surface radialement interne 55. De plus, la deuxième distance radiale R2 correspond donc ici à un rayon externe de l'anneau cylindrique 80.

La deuxième cavité 82 est typiquement délimitée axialement par deux joints annulaires ou segments d'étanchéité 84A et 84B opposés, disposés respectivement dans deux rainures annulaires formées dans l'anneau cylindrique 80, ou, en variante, dans la jupe annulaire 58.

La deuxième cavité 82 est en outre raccordée à au moins un deuxième canal d'alimentation en fluide d'amortissement 86, formé au travers du support de palier 34, en l'occurrence au travers de la jupe annulaire 58.

Au sein de la turbomachine, le deuxième canal d'alimentation en fluide d'amortissement 86 est raccordé à l'unité d'alimentation en fluide d'amortissement, qui n'est pas visible sur les figures.

L'anneau cylindrique 80 comporte avantageusement une rainure annulaire de distribution 88 agencée en regard d'une sortie du deuxième canal d'alimentation en fluide d'amortissement 86, de manière à faciliter la répartition du fluide d'amortissement tout autour de l'axe de palier A, au sein de la deuxième cavité 82. En variante, une telle rainure annulaire de distribution peut être formée dans la jupe annulaire 58, auquel cas le deuxième canal d'alimentation en fluide d'amortissement 86 débouche au travers de la rainure annulaire de distribution.

Dans l'exemple illustré, le deuxième film fluide d'amortissement F2 chevauche axialement le premier film fluide d'amortissement F1. Autrement dit, le premier film fluide d'amortissement F1 et le deuxième film fluide d'amortissement F2 comportent des portions respectives F1A et F2A (figure 5) agencées en regard l'une de l'autre radialement, c'est-à-dire définies entre deux cotes axiales communes X1 et X2. Une telle configuration permet d'optimiser la compacité du dispositif 30, ou à l'inverse, de maximiser le volume disponible pour le deuxième film fluide d'amortissement F2 pour un encombrement donné du dispositif 30. Il est ainsi possible d'agencer les première et deuxième cavités 37, 82 de sorte que ces dernières aient des volumes très différents, de manière à permettre l'amortissement de modes de vibrations distincts, comme cela apparaîtra plus clairement dans ce qui suit.

Ainsi, dans des modes de réalisation préférés de l'invention, les première et deuxième cavités 37, 82 présentent en particulier des épaisseurs respectives différentes.

De plus, l'anneau cylindrique 80 s'étend de préférence en direction du corps annulaire 53 du support de palier 34, à partir de la bride annulaire 48 de la structure de raccordement 42. Autrement dit, l'anneau cylindrique 80 s'étend axialement entre la bride annulaire 48 et le corps annulaire 53. Une partie de l'anneau cylindrique 80 s'étend ainsi autour du talon annulaire 60. De plus, l'anneau cylindrique 80 est de préférence agencé à une extrémité radialement externe de la bride annulaire 48.

Le fonctionnement du dispositif 30 des figures 5 et 6 est semblable à celui du dispositif 30 des figures 2-4 mais diffère de ce dernier par la présence de la deuxième cavité 82 qui peut recevoir du fluide d'amortissement par le deuxième canal d'alimentation en fluide d'amortissement 86, pour former le deuxième film fluide d'amortissement F2 dans la deuxième cavité 82. Le deuxième film fluide d'amortissement F2 permet d'amortir des mouvements transversaux de la bague extérieure 46, et donc d'amortir des vibrations de l'arbre.

Du fait de la configuration du dispositif 30 des figures 5 et 6, les paramètres géométriques et opérationnels du deuxième film fluide d'amortissement F2 peuvent être aisément définis de sorte que les propriétés d'amortissement du deuxième film fluide d'amortissement F2 permettent à ce dernier d'amortir un mode de vibrations différent de celui amorti par le premier film fluide d'amortissement F1. L'utilisation conjointe des deux films fluides d'amortissement F1 et F2 peut en outre permettre d'amortir encore un autre mode de vibrations de l'arbre.

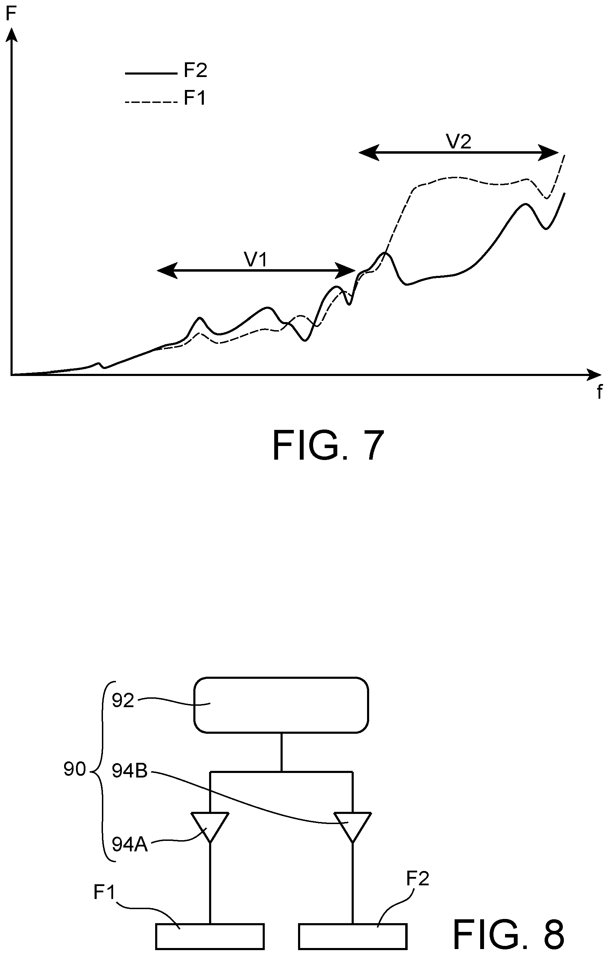

Ainsi, la figure 7 est un graphe illustrant la force F transmise au support de palier 34 par la structure de raccordement 42 dans une condition de balourd déterminée, lors de l'utilisation du premier film fluide d'amortissement F1 (en trait interrompu) et du deuxième film fluide d'amortissement F2 (en trait continu), en fonction de la vitesse f de rotation de l'arbre.

Ce graphe permet de déterminer que, dans un exemple particulier mis en oeuvre par les inventeurs, le premier film fluide d'amortissement F1 est préférable dans une plage de régime inférieure V1 tandis que le deuxième film fluide d'amortissement F2 est préférable dans une plage de régime supérieure V2.

La figure 8 illustre très schématiquement l'unité d'alimentation en fluide d'amortissement 90, qui comprend de manière générale une source de fluide d'amortissement 92, ainsi que des moyens de commande de l'alimentation de chacun des films fluides d'amortissement F1 et F2 à partir de la source 92, ces moyens de commande comprenant par exemple une première vanne 94A disposée dans un circuit aboutissant au premier canal d'alimentation en fluide d'amortissement 70, et une deuxième vanne 94B disposée dans un circuit aboutissant au deuxième canal d'alimentation en fluide d'amortissement 86, de sorte que les deux vannes 94A, 94B permettent de commander sélectivement l'alimentation en fluide d'amortissement de la première cavité 37 et de la deuxième cavité 82.

La source 92 comprend typiquement un réservoir de fluide d'amortissement et des moyens de circulation de ce fluide, tels qu'une pompe.

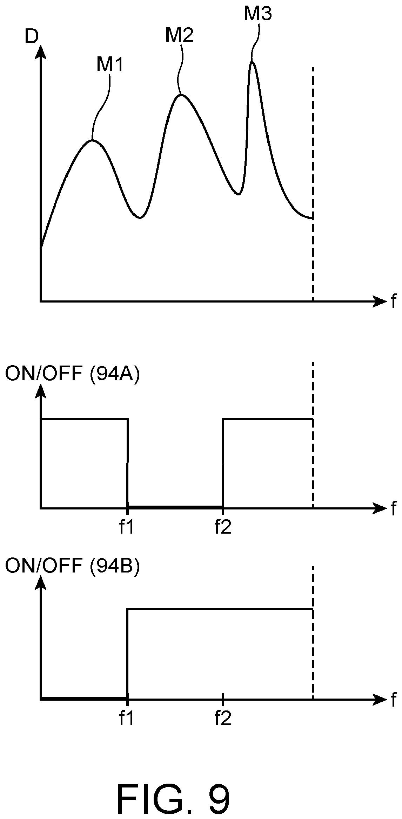

La figure 9 illustre l'utilisation du dispositif 30 associé à l'unité d'alimentation en fluide d'amortissement 90. Plus précisément, la figure 9 illustre la faculté d'amortissement D en fonction de la vitesse de rotation f de l'arbre (partie haute de la figure 9), au regard de l'état ouvert (ON)/fermé (OFF) des deux vannes 94A, 94B (partie basse de la figure 9).

Comme le montre la figure 9, dans une plage inférieure de régime de rotation, en dessous d'un premier seuil de vitesse f1, la première vanne 94A est à l'état ouvert ON (c'est-à-dire passant) tandis que la deuxième vanne 94B est à l'état fermé OFF (c'est-à-dire bloquant), de sorte que le dispositif 30 utilise exclusivement le premier film fluide d'amortissement F1 et permet ainsi d'amortir un premier mode de vibration M1. Dans une plage intermédiaire de régime de rotation, comprise entre le premier seuil de vitesse f1 et un deuxième seuil de vitesse f2, la première vanne 94A est à l'état fermé OFF tandis que la deuxième vanne 94B est à l'état ouvert ON, de sorte que le dispositif 30 utilise exclusivement le deuxième film fluide d'amortissement F2 et permet ainsi d'amortir un deuxième mode de vibration M2. Enfin, dans une plage supérieure de régime de rotation, au-delà du deuxième seuil de vitesse f2, la première vanne 94A et la deuxième vanne 94B sont toutes les deux à l'état ouvert ON, de sorte que le dispositif 30 utilise simultanément les deux films fluides d'amortissement F1 et F2 et permet ainsi d'amortir un troisième mode de vibration M3.

Le procédé décrit ci-dessus peut bien entendu être adapté à la configuration des modes de vibration à amortir, et à la configuration du dispositif 30.

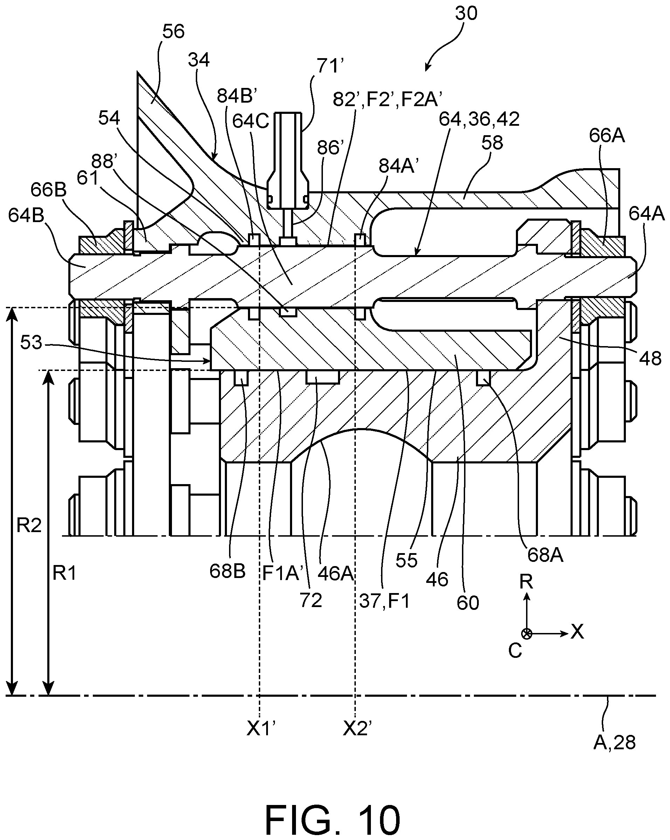

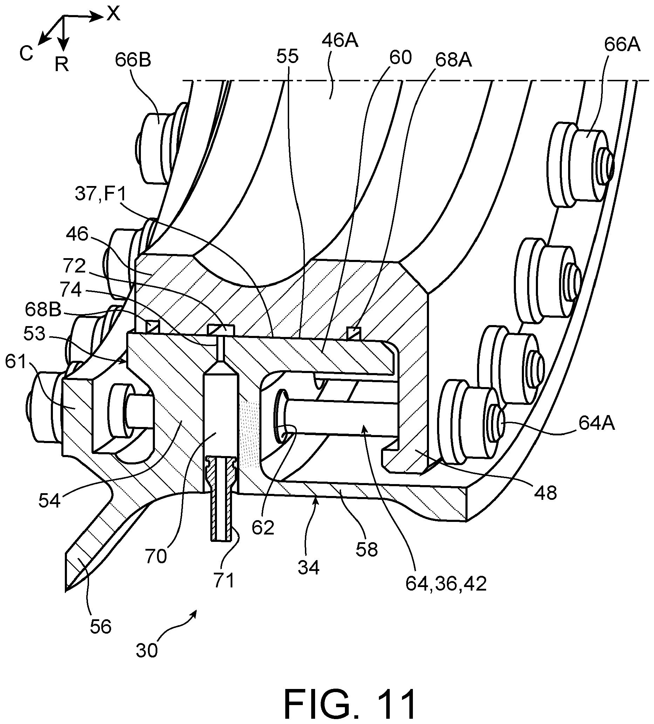

Les figures 10 et 11 illustrent un dispositif 30 selon un deuxième mode de réalisation de l'invention, comprenant une pluralité de deuxièmes films fluides d'amortissement F2' formés autour des parties intermédiaires 64C respectives d'au moins certaines des colonnettes 64, au sein des passages 62 correspondants du corps annulaire 53 du support de palier 34.

Des deuxièmes films fluides d'amortissement F2' sont par exemple formés autour des parties intermédiaires 64C respectives d'une colonnette 64 sur trois, ou de deux colonnettes 64 sur trois, ou encore autour des parties intermédiaires 64C respectives de toutes les colonnettes 64.

Ainsi, les passages 62 correspondants comprennent respectivement des deuxièmes cavités 82' pour recevoir respectivement les deuxièmes films fluides d'amortissement F2'. Ces deuxièmes cavités 82' sont donc, de manière plus générale, formées entre le support de palier 34 et la structure élastiquement déformable 36, qui fait partie de la structure de raccordement 42, radialement à l'extérieur par rapport à la surface radialement interne 55 du corps annulaire 53 du support de palier 34. De plus, la deuxième distance radiale R2 correspond donc ici à la cote radiale minimale de chacun des passages 62.

Dans l'exemple illustré, chaque partie intermédiaire 64C entourée par un deuxième film fluide d'amortissement F2' forme une portée cylindrique. Une telle portée cylindrique permet que l'épaisseur du deuxième film fluide d'amortissement F2' correspondant soit optimale. En modulant le diamètre de la portée cylindrique lors de la conception du dispositif 30, il est ainsi possible de moduler l'épaisseur du deuxième film fluide d'amortissement F2' correspondant, sans changer le reste du dispositif 30.

Chaque deuxième cavité 82' est typiquement délimitée axialement par deux joints annulaires ou deux segments d'étanchéité 84A' et 84B' opposés, disposés respectivement dans deux rainures annulaires formées dans le corps annulaire 53 du support de palier 34, ou, en variante, formées dans la partie intermédiaire 64C de la colonnette 64 correspondante.

Les deuxièmes cavités 82' sont en outre raccordées respectivement à des deuxièmes canaux d'alimentation en fluide d'amortissement 86', formés au travers du support de palier 34, en l'occurrence au travers du corps annulaire 53, par exemple radialement à l'extérieur par rapport aux deuxièmes cavités 82'.

Au sein de la turbomachine, chaque deuxième canal d'alimentation en fluide d'amortissement 86' est raccordé à l'unité d'alimentation en fluide d'amortissement, qui n'est pas visible sur les figures 10-11 à l'exception d'un conduit 71' (figure 10) faisant partie d'une rangée annulaire de conduits par lesquels l'unité d'alimentation en fluide d'amortissement est reliée respectivement aux deuxièmes canaux d'alimentation en fluide d'amortissement 86'.

Le corps annulaire 53 comporte avantageusement des rainures annulaires de distribution 88', agencées respectivement autour des deuxièmes cavités 82', et au travers desquelles débouchent respectivement les deuxièmes canaux d'alimentation en fluide d'amortissement 86', de manière à faciliter la répartition du fluide d'amortissement tout autour de la partie intermédiaire 64C de chaque colonnette 64 correspondante. En variante, une telle rainure annulaire de distribution peut être formée dans la partie intermédiaire 64C de chaque colonnette 64 correspondante, en regard du deuxième canal d'alimentation en fluide d'amortissement 86' correspondant.

Dans l'exemple illustré, chacun des deuxièmes films fluides d'amortissement F2' chevauche axialement le premier film fluide d'amortissement F1. Autrement dit, le premier film fluide d'amortissement F1 et chaque deuxième film fluide d'amortissement F2' comportent des portions respectives F1A' et F2A' (figure 10) agencées en regard l'une de l'autre radialement, c'est-à-dire délimitées entre deux cotes axiales communes X1' et X2'. Comme pour le premier mode de réalisation, une telle configuration permet d'optimiser la compacité du dispositif 30, ou à l'inverse, de maximiser le volume disponible pour les films fluide d'amortissement F2' pour un encombrement donné du dispositif 30.

L'agencement de deuxièmes films fluide d'amortissement F2' autour de colonnettes 64 permet une grande latitude dans la définition des paramètres géométriques de ces films, indépendamment de la configuration géométrique globale du dispositif 30.

Le mode de fonctionnement du dispositif 30 des figures 10 et 11 est analogue à celui du dispositif 30 des figures 5 et 6. En particulier, les considérations développées ci-dessus en référence aux figures 7-9 sont aisément transposables au dispositif 30 des figures 10 et 11.

En variante, le dispositif 30 peut comprendre de manière combinée les deuxièmes films fluides d'amortissement F2 et F2' du premier mode de réalisation et du deuxième mode de réalisation décrits ci-dessus.

Selon encore d'autres variantes, plusieurs deuxièmes films fluides d'amortissement F2 coaxiaux, analogues au film F2 des figures 5 et 6, peuvent être prévus au sein du dispositif 30. À cet effet, la structure de raccordement 42 peut par exemple comprendre plusieurs anneaux cylindriques coaxiaux agencés respectivement en regard de plusieurs jupes cylindriques correspondantes du support de palier 34.

L'accroissement du nombre de films fluides d'amortissement, et l'agencement de ces derniers selon des configurations bien distinctes, peut permettre d'accroître le nombre de modes de vibration traités par le dispositif 30.

## Revendications

1. Dispositif (30) pour le centrage et le guidage en rotation d'un arbre de turbomachine, comprenant :
- un palier de roulement (32) comprenant une bague extérieure (46) définissant un axe de palier (A) ;
- un support de palier (34) comprenant un corps annulaire (53) présentant une surface annulaire radialement interne (55) entourant la bague extérieure (46) ;
- une structure de raccordement (42) reliant la bague extérieure (46) au support de palier (34) et comprenant une structure élastiquement déformable (36) par laquelle la structure de raccordement (42) est reliée au support de palier (34) ; et
- une première cavité (37) formée entre la surface annulaire radialement interne (55) du corps annulaire (53) et la bague extérieure (46) pour recevoir un premier film fluide d'amortissement (F1) ;
**caractérisé en ce qu'**il comprend en outre au moins une deuxième cavité (82, 82') formée entre le support de palier (34) et la structure de raccordement (42), et agencée radialement à l'extérieur par rapport à la surface annulaire radialement interne (55) du corps annulaire (53), pour recevoir un deuxième film fluide d'amortissement (F2, F2') respectif.

2. Dispositif selon la revendication 1, dans lequel ladite au moins une deuxième cavité comprend au moins une deuxième cavité (82, 82') qui chevauche axialement la première cavité (37).

3. Dispositif selon la revendication 1 ou 2, dans lequel ladite au moins une deuxième cavité comprend au moins une deuxième cavité (82, 82') ayant une épaisseur différente d'une épaisseur de la première cavité (37).

4. Dispositif selon l'une quelconque des revendications 1 à 3, dans lequel le corps annulaire (53) du support de palier (34) comporte une portion annulaire radiale (54) qui se termine, à son extrémité radialement interne, par un talon annulaire (60) définissant la surface annulaire radialement interne (55) du corps annulaire (54), et dans lequel ladite au moins une deuxième cavité est agencée radialement à l'extérieur par rapport au talon annulaire (60).

5. Dispositif selon l'une quelconque des revendications 1 à 4, dans lequel la structure de raccordement (42) comporte en outre une bride annulaire (48) s'étendant radialement vers l'extérieur à partir de la bague extérieure (46) et reliant la bague extérieure (46) à la structure élastiquement déformable (36).

6. Dispositif selon la revendication 5, dans lequel ladite au moins une deuxième cavité comprend au moins une deuxième cavité (82) formée entre une jupe annulaire (58), qui s'étend à partir du corps annulaire (53) du support de palier (34), et un anneau cylindrique (80), qui s'étend à partir de la bride annulaire (48) de la structure de raccordement (42).

7. Dispositif selon la revendication 6, dans lequel l'anneau cylindrique (80) s'étend axialement entre la bride annulaire (48) de la structure de raccordement (42) et le corps annulaire (53) du support de palier (34).

8. Dispositif selon l'une quelconque des revendications 5 à 7, dans lequel la structure élastiquement déformable (36) est formée d'une pluralité de colonnettes (64) réparties autour de l'axe de palier (A) et ayant chacune une première partie respective (64A) montée sur la bride annulaire (48) de la structure de raccordement (42), et une deuxième partie respective (64B) espacée de la première partie respective (64A) et montée sur le support de palier (34).

9. Dispositif selon la revendication 8, dans lequel :
- le support de palier (34) comporte une bride annulaire (61) s'étendant à partir du corps annulaire (53), de sorte que le corps annulaire (53) soit agencé axialement entre la bride annulaire (48) de la structure raccordement (42) et la bride annulaire (61) du support de palier (34) ;
- le corps annulaire (53) du support de palier (34) comporte une pluralité de passage (62) au travers desquels s'étendent respectivement des parties intermédiaires respectives (64C) des colonnettes (64), agencées entre les premières parties respectives (64A) et les deuxièmes parties respectives (64B) des colonnettes ;
- les deuxièmes parties respectives (64B) des colonnettes sont montées sur la bride annulaire (61) du support de palier (34) ; et
- ladite au moins une deuxième cavité comprend une pluralité de deuxièmes cavités (82') formées autour des parties intermédiaires respectives (64C) d'au moins certaines des colonnettes (64), au sein des passages (62) correspondants du corps annulaire (53) du support de palier (34), pour recevoir respectivement une pluralité de deuxièmes films fluides d'amortissement (F2').

10. Dispositif selon la revendication 9, dans lequel le corps annulaire (53) du support de palier (34) comporte au moins un premier canal d'alimentation en fluide d'amortissement (70), s'étendant entre deux passages consécutifs de ladite pluralité de passages (62), et débouchant dans la première cavité (37), pour alimenter la première cavité (37) en fluide d'amortissement destiné à former le premier film fluide d'amortissement (F1).

11. Dispositif selon l'une quelconque des revendications 1 à 10, comprenant en outre des moyens de commande permettant de commander sélectivement l'alimentation de la première cavité (37), et de la deuxième cavité (82) ou de chaque deuxième cavité (82'), avec un fluide d'amortissement.

12. Turbomachine, comprenant au moins un arbre centré et guidé en rotation par au moins un dispositif (30) selon l'une quelconque des revendications 1 à 11.

## Patentansprüche

1. Vorrichtung (30) zur Zentrierung und Drehführung einer Turbomaschinenwelle, umfassend:
- ein Wälzlager (32), das einen Außenring (46) umfasst, der eine Lagerachse (A) definiert;
- einen Lagerträger (34), der einen ringförmigen Körper (53) umfasst, der eine radial innere ringförmige Fläche (55) aufweist, die den Außenring (46) umgibt;
- eine Verbindungsstruktur (42), die den Außenring (46) mit dem Lagerträger (34) verbindet und eine elastisch verformbare Struktur (36) umfasst, durch die die Verbindungsstruktur (42) mit dem Lagerträger (34) verbunden ist; und
- einen ersten Hohlraum (37), der zwischen der radial inneren ringförmigen Fläche (55) des ringförmigen Körpers (53) und dem Außenring (46) gebildet ist, um einen ersten Dämpfungsfluidfilm (F1) aufzunehmen;
**dadurch gekennzeichnet, dass** sie weiter mindestens einen zweiten Hohlraum (82, 82') umfasst, der zwischen dem Lagerträger (34) und der Verbindungsstruktur (42) gebildet und in Bezug auf die radial innere ringförmige Fläche (55) des ringförmigen Körpers (53) radial außen angeordnet ist, um einen jeweiligen zweiten Dämpfungsfluidfilm (F2, F2') aufzunehmen.

2. Vorrichtung nach Anspruch 1, wobei der mindestens eine zweite Hohlraum mindestens einen zweiten Hohlraum (82, 82') umfasst, der den ersten Hohlraum (37) axial überlappt.

3. Vorrichtung nach Anspruch 1 oder 2, wobei der mindestens eine zweite Hohlraum mindestens einen zweiten Hohlraum (82, 82') umfasst, der eine Dicke aufweist, die sich von einer Dicke des ersten Hohlraums (37) unterscheidet.

4. Vorrichtung nach einem der Ansprüche 1 bis 3, wobei der ringförmige Körper (53) des Lagerträgers (34) einen radialen ringförmigen Abschnitt (54) umfasst, der an seinem radial inneren Ende mit einem ringförmigen Absatz (60) endet, der die radial innere ringförmige Fläche (55) des ringförmigen Körpers (54) definiert, und wobei der mindestens eine zweite Hohlraum in Bezug auf den ringförmigen Absatz (60) radial außen angeordnet ist.

5. Vorrichtung nach einem der Ansprüche 1 bis 4, wobei die Verbindungsstruktur (42) weiter einen ringförmigen Flansch (48) umfasst, der sich vom Außenring (46) ausgehend radial nach außen erstreckt und den Außenring (46) mit der elastisch verformbaren Struktur (36) verbindet.

6. Vorrichtung nach Anspruch 5, wobei der mindestens eine zweite Hohlraum mindestens einen zweiten Hohlraum (82) umfasst, der zwischen einer ringförmigen Schürze (58), die sich vom ringförmigen Körper (53) des Lagerträgers (34) ausgehend erstreckt, und einem zylindrischen Ring (80), der sich vom ringförmigen Flansch (48) der Verbindungsstruktur (42) ausgehend erstreckt, gebildet ist.

7. Vorrichtung nach Anspruch 6, wobei sich der zylindrische Ring (80) axial zwischen dem ringförmigen Flansch (48) der Verbindungsstruktur (42) und dem ringförmigen Körper (53) des Lagerträgers (34) erstreckt.

8. Vorrichtung nach einem der Ansprüche 5 bis 7, wobei die elastisch verformbare Struktur (36) aus einer Vielzahl von Säulen (64) gebildet ist, die um die Lagerachse (A) herum verteilt sind und jeweils einen jeweiligen ersten Teil (64A), der am ringförmigen Flansch (48) der Verbindungsstruktur (42) angebracht ist, und einen jeweiligen zweiten Teil (64B) aufweisen, der vom jeweiligen ersten Teil (64A) beabstandet und am Lagerträger (34) angebracht ist.

9. Vorrichtung nach Anspruch 8, wobei:
- der Lagerträger (34) einen ringförmigen Flansch (61) umfasst, der sich vom ringförmigen Körper (53) ausgehend so erstreckt, dass der ringförmige Körper (53) axial zwischen dem ringförmigen Flansch (48) der Verbindungsstruktur (42) und dem ringförmigen Flansch (61) des Lagerträgers (34) angeordnet ist;
- der ringförmige Körper (53) des Lagerträgers (34) eine Vielzahl von Durchgängen (62) umfasst, durch die sich jeweils jeweilige Zwischenteile (64C) der Säulen (64) erstrecken, die zwischen den jeweiligen ersten Teilen (64A) und den jeweiligen zweiten Teilen (64B) der Säulen angeordnet sind;
- die jeweiligen zweiten Teile (64B) der Säulen am ringförmigen Flansch (61) des Lagerträgers (34) angebracht sind; und
- der mindestens eine zweite Hohlraum eine Vielzahl von zweiten Hohlräumen (82') umfasst, die um die jeweiligen Zwischenteile (64C) mindestens einiger der Säulen (64) herum, im Inneren der entsprechenden Durchgänge (62) des ringförmigen Körpers (53) des Lagerträgers (34) gebildet sind, um jeweils eine Vielzahl von zweiten Dämpfungsfluidfilmen (F2') aufzunehmen.

10. Vorrichtung nach Anspruch 9, wobei der ringförmige Körper (53) des Lagerträgers (34) mindestens einen ersten Dämpfungsfluid-Versorgungskanal (70) umfasst, der sich zwischen zwei aufeinanderfolgenden Durchgängen der Vielzahl von Durchgängen (62) erstreckt und in den ersten Hohlraum (37) mündet, um den ersten Hohlraum (37) mit Dämpfungsfluid, das dazu bestimmt ist, den ersten Dämpfungsfluidfilm (F1) zu bilden, zu versorgen.

11. Vorrichtung nach einem der Ansprüche 1 bis 10, die weiter Steuermittel umfasst, die es ermöglichen, die Versorgung des ersten Hohlraums (37) und des zweiten Hohlraums (82) oder jedes zweiten Hohlraums (82') mit einem Dämpfungsfluid selektiv zu steuern.

12. Turbomaschine, die mindestens eine Welle umfasst, die von mindestens einer Vorrichtung (30) nach einem der Ansprüche 1 bis 11 zentriert und drehgeführt wird.

## Claims

1. Device (30) for centring and rotationally guiding a turbomachine shaft, comprising:
- a rolling-element bearing (32) comprising an outer race (46) defining a bearinghousing axis (A);
- a bearing support (34) comprising an annular body (53) having a radially inner annular surface (55) surrounding the outer race (46);
- a connecting structure (42) connecting the outer race (46) to the bearing support (34) and comprising an elastically deformable structure (36) by means of which the connecting structure (42) is connected to the bearing support (34); and
- a first cavity (37) formed between the radially inner annular surface (55) of the annular body (53) and the outer race (46) to receive a first damping fluid film (F1); **characterised in that** it further comprises at least one second cavity (82, 82') formed between the bearing support (34) and the connecting structure (42), and arranged radially outwards with respect to the radially inner annular surface (55) of the annular body (53), to receive a second respective damping fluid film (F2, F2').

2. Device according to claim 1, wherein said at least one second cavity comprises at least one second cavity (82, 82') that axially overlaps the first cavity (37).

3. Device according to claim 1 or 2, wherein said at least one second cavity comprises at least one second cavity (82, 82') having a thickness different from a thickness of the first cavity (37).

4. Device according to any one of claims 1 to 3, wherein the annular body (53) of the bearing support (34) includes a radial annular portion (54) that terminates, at the radially inner end thereof, in an annular heel (60) defining the radially inner annular surface (55) of the annular body (54), and wherein said at least one second cavity is arranged radially outwards with respect to the annular heel (60).

5. Device according to any one of claims 1 to 4, wherein the connecting structure (42) further includes an annular flange (48) extending radially outwards from the outer race (46) and connecting the outer race (46) to the elastically deformable structure (36).

6. Device according to claim 5, wherein said at least one second cavity comprises at least one second cavity (82) formed between the annular skirt (58), which extends from the annular body (53) of the bearing support (34), and a cylindrical ring (80), which extends from the annular flange (48) of the connecting structure (42).

7. Device according to claim 6, wherein the cylindrical ring (80) extends axially between the annular flange (48) of the connecting structure (42) and the annular body (53) of the bearing support (34).

8. Device according to any one of claims 5 to 7, wherein the elastically deformable structure (36) is formed from a plurality of small columns (64) distributed around the bearing axis (A) and each having a respective first part (64A) mounted on the annular flange (48) of the connecting structure (42), and a respective second part (64B) spaced apart from the respective first part (64A) and mounted on the bearing support (34).

9. Device according to claim 8, wherein
- the bearing support (34) includes an annular flange (61) extending from the annular body (53), so that the annular body (53) is arranged axially between the annular flange (48) of the connecting structure (42) and the annular flange (61) of the bearing support (34);
- the annular body (53) of the bearing support (34) includes a plurality of passages (62) through which respective intermediate parts (64C) of the small columns (64) extend respectively, arranged between the respective first parts (64A) and the respective second parts (64B) of the small columns;
- the respective second parts (64B) of the small columns are mounted on the annular flange (61) of the bearing support (34); and
- said at least one second cavity comprises a plurality of second cavities (82') formed around the respective intermediate parts (64C) of at least some of the small columns (64), in corresponding passages (62) of the annular body (53) of the bearing support (34), to receive respectively a plurality of second damping fluid films (F2').

10. Device according to claim 9, wherein the annular body (53) of the bearing support (34) includes at least one first channel (70) for supplying damping fluid, extending between two consecutive passages of said plurality of passages (62), and emerging in the first cavity (37), to supply the first cavity (37) with damping fluid intended to form the first damping fluid film (F1).

11. Device according to any one of claims 1 to 10, further comprising control means for selectively controlling the supply of the first cavity (37), and of the second cavity (82) or of each second cavity (82'), with a damping fluid.

12. Turbomachine, comprising at least one shaft centred and rotationally guided by at least one device (30) according to any one of claims 1 to 11.
